## Europäisches Patentamt
## European Patent Office
## Office européen des brevets

(11) Veröffentlichungsnummer: **0 279 024**
A2

# (12) EUROPÄISCHE PATENTANMELDUNG

(21) Anmeldenummer: 87114393.9

(22) Anmeldetag: 02.10.87

(51) Int. Cl.⁴: **B29D 23/18** , B29C 67/22 , //B29L23:18

(30) Priorität: 12.02.87 DE 3704380

(43) Veröffentlichungstag der Anmeldung:
24.08.88 Patentblatt 88/34

(84) Benannte Vertragsstaaten:
AT BE CH DE ES FR GB GR IT LI NL SE

(71) Anmelder: **Kabelmetal electro Gesellschaft mit beschränkter Haftung**
**Kabelkamp 20 Postfach 260**
**D-3000 Hannover 1(DE)**

(72) Erfinder: **Friessner, Jürgen, Dipl.-Ing.**
**Hirschdamm 11**
**D-3002 Wedemark 2(DE)**

(54) **Verfahren zur kontinuierlichen Herstellung eines flexiblen wärmeisolierten Leitungsrohres.**

(57) Bei einem Verfahren zur kontinuierlichen Herstellung eines flexiblen wärmeisolierten Leitungsrohres aus einem Innenrohr, einem Außenrohr und einer zwischen Innen-und Außenrohr befindlichen Schicht aus aufgeschäumten Kunststoff, wird ein gewelltes Kunststoffrohr kontinuierlich von einem Vorrat abgezogen, längs aufgeschlitzt, um das Innenrohr herumgelegt und der Längsschlitz nach dem Einfüllen der Schaumstoffkomponenten verklebt oder verschweißt.

EP 0 279 024 A2

## Verfahren zur kontinuierlichen Herstellung eines flexiblen wärmeisolierten Leitungsrohres.

Die Erfindung betrifft ein Verfahren zur kontinuierlichen Herstellung eines flexiblen wärmeisolierten Leitungsrohres, bestehend aus einem flexiblen Innenrohr, einem Außenrohr mit gewellter Wandung und einer zwischen dem Innen- und dem Außenrohr befindlichen Schicht aus aufgeschäumtem Kunststoff auf der Basis von Polyurethan, bei dem ein kontinuierlich zugeführtes Innenrohr von einer äußeren Hülle umgeben wird, und ein aufschäumbares Kunststoffgemisch zugeführt wird, welches den Ringraum zwischen Innen- und Außenrohr ausschäumt, nachdem die Hülle zum Außenrohr geschlossen ist.

Aus der DE-PS 1779406 ist ein Verfahren zur Herstellung eines thermisch isolierten Leitungsrohres bekannt, bei dem ein längs einlaufendes Metallband um ein kontinuierlich zugeführtes Innenrohr zum Schlitzrohr geformt, längsnahtverschweißt und das verschweißte Rohr anschließend gewellt wird. Ein aufschäumbares Kunststoffgemisch wird auf ein Zwischenband aufgebracht, welches nach dem Wellen des zum Rohr geformten Metallbandes den Ringraum zwischen dem Innenrohr und dem Außenrohr ausschäumt. Das bei diesem bekannten Verfahren verwendete Innenrohr ist ein Wellrohr, so daß das erhaltene Produkt ein biegbares, wärmeisoliertes Leitungsrohr ist, welches wie ein elektrisches Kabel auf Kabeltrommeln aufgewickelt und direkt von der Kabeltrommel ins Erdreich verlegt werden kann. Damit eine Korrosion des Außenrohres vermieden wird, ist es erforderlich, auf das Außenrohr einen Korrosionsschutz in Form einer bitminösen Masse aufzubringen, sowie einen Mantel aus thermoplastischem Kunststoff aufzuextrudieren. Das wärmeisolierte Leitungsrohr kann aufgrund des stabilen Außenrohres hohe Verkehrslasten aufnehmen. Durch die Wellung des Innenrohres können Längenausdehnung infolge Temperaturschwankungen des in dem Innenrohr transportierten Mediums kompensiert werden, so daß auf aufwendige Verlegungstechniken verzichtet werden kann.

Ein Nachteil dieser bekannten Rohrkonstruktion ist darin zu sehen, daß es in den gängigen Größen nicht auf Durchmesser gewickelt werden kann, die kleiner als 3 m sind. Die Ursache hierfür ist darin zu sehen, daß der aus mechanischen Gründen erforderliche Kunststoffmantel die Rohrkonstruktion sehr steif macht. Schwierigkeiten bei dem genannten Verfahren ergeben sich noch dadurch, daß die Reaktionszeit des aufschäumbaren Kunststoffgemisches exakt eingestellt werden muß, so daß der Schaum den Ringraum zwischen dem Innen- und dem Außenrohr erst nach der Wellung ausschäumt. Wird der Ringraum beispielsweise durch einen Stillstand der Fertigungsanlage bzw. durch falsche Einstellung der Reaktionszeit vor dem Wellen ausgeschäumt, so wird eine freie Ausbreitung des Schaumes durch den Wellvorgang behindert. Es entstehen dann Lunker im Schaum, die unerwünscht sind.

Der vorliegenden Erfindung liegt die Aufgabe zugrunde, ein Verfahren anzugeben, mit dem flexible wärmeisolierte Leitungsrohre hergestellt werden können, die so flexibel sind, daß sie insbesondere bei kleineren, Abmessungen zu einem Ringbund mit einem Durchmesser von 2,5 m aufgewickelt werden können. Weiterhin soll das nach dem erfindungsgemäßen Verfahren hergestellte Leitungsrohr wesentlich leichter als das bekannte sein. Das Herstellungsverfahren soll weniger anfällig gegen Fehlfertigungen sein.

Diese Aufgabe wird bei einem Verfahren der eingangs erwähnten Art dadurch gelöst, daß ein gewelltes Kunststoffrohr kontinuierlich von einem Vorrat abgezogen, längs aufgeschlitzt und um das Innenrohr herumgelegt wird und daß der Längsschlitz nach dem Einführen des aufschäumbaren Kunststoffgemisches verklebt oder verschweißt wird.

Der wesentliche Vorteil des erfindungsgemäßen Verfahren ist darin zu sehen, daß flexible wärmeisolierte Leitungsrohre wesentlich schneller als nach dem bekannten Verfahren hergestellt werden können. Das bekannte Verfahren war bezüglich seiner Fertigungsgeschwindigkeit durch den Wellvorgang des Außenrohres beschränkt. Bei dem erfindungsgemäßen Verfahren wird die Fertigungsgeschwindigkeit im wesentlichen durch die Reaktionszeit und die Abkühlgeschwindigkeit der Schweißnaht des gewellten Kunststoffrohres nach oben begrenzt. Zur Abstützung der noch weichen Schweißnaht kann das Rohr nach dem Schweißen in ein Führungsrohr eingeleitet werden. Alternativ ist es auch möglich, unmittelbar hinter dem Schweißpunkt eine Abzugsvorrichtung, beispielsweise einen Bandabzug oder einen sog. Spannbackenabzug vorzusehen, dessen Treibelemente beidseitig an dem Rohr angreifen und somit die Schweißnaht zusammendrücken.

Mit besonderem Vorteil wird das Rohr durch Spiegelschweißung verschlossen. Bei der sog. Spiegelschweißung wird eine beheizbare Metallplatte, der sog. Heizspiegel, in den Spalt zwischen den Längskanten des Kunststoffwellrohres angeordnet. Durch die erhöhte Temperatur des Heizspiegels werden die zu verschweißenden Bandkanten angeschmolzen und in noch geschmolzenem Zustand gegeneinandergepreßt.

Für eine saubere Schweißnaht ist es erforderlich, daß die Bandkanten exakt geführt werden. Dieses Führen der Bandkanten geschieht vom Aufschlitzen bis zum Schweißpunkt. Da das Innenrohr in das längs geschlitzte Außenrohr eingeführt werden muß, ist das Führen der Bandkanten so vorzunehmen, daß der Längsschlitz genügend weit aufgeweitet wird. Damit das Innenrohr zentrisch zum Kunststoffaußenrohr gelegen ist, hat es sich als vorteilhaft erwiesen, vor der Umhüllung einen oder mehrere Abstandshalter auf das Innenrohr aufzubringen. Als Abstandshalter können dabei sog. Abstandshalterscheiben oder ein wendelartig aufgebrachter Abstandshalter aus einem aufgeschäumten Kunststoff, vorzugsweise aus Polyurethan, verwendet werden. Da das Ausschäumen des Ringraums zwischen dem Innenrohr und dem verschlossenen Außenrohr unter Druck vorgenommen wird und durch diesen die Gefahr besteht, daß die Schweißnaht aufgebrochen wird, hat es sich als vorteilhaft erwiesen, daß nach dem Schweißen oder Kleben der Längsnaht die Längskanten gegeneinandergedrückt werden und die Naht intensiv gekühlt wird. Das aufschäumbare Gemisch wird bezüglich der Reaktionszeit so eingestellt, daß der Ringraum erst nach dem Erkalten der Längsnaht vollständig ausgefüllt wird. Als Außenrohr wird vorteilhafterweise ein doppelwandiges Kunststoffrohr verwendet, dessen Innenrohr glatt und dessen mit dem Innenrohr kraftschlüssig verbundenes Außenrohr gewellt ist. Derartige Kunststoffrohre sind auf dem Markt erhältlich und zeichnen sich durch eine hohe Querdruckbeständigkeit und eine hohe Flexibilität aus. Darüber hinaus gewährleistet die Wellung des Kunststoffaußenrohres eine sichere Einbettung im Erdreich. Die Führung der Bandkanten nach dem Auftrennen des Wellrohres geschieht zweckmäßigerweise durch eine Vielzahl von Formrollen, die an die Längskanten des aufgeschlitzten Wellrohres angreifen. Alternativ ist es möglich, daß unmittelbar nach dem Auftrennen des Wellrohres eine walzen-oder tonnenförmige Formwalze auf die innere Oberfläche des Wellrohres einwirkt. Die Formwalze ist dabei so breit zu wählen bzw. bezüglich ihres Profils so auszubilden, daß sie das geschlitzte Kunststoffwellrohr entgegen seinem elastichen Rückstellverhalten so aufweitet, daß ein problemloses Einführen des mit der Abstandshalterung versehenen Innenrohres und das Einfüllen der Schaumstoffkomponenten ermöglicht wird. Zu einem besonders qualitativ hochwertigen Produkt gelangt man, wenn an der inneren Oberfläche des gewellten Außenrohres eine Metallfolie angeordnet wird, die zu einem Rohr mit überlappenden Bandkanten geformt und im Überlappungsbereich verklebt wird. Dabei ist es vorteilhaft, daß das Metallband bzw. die Metallfolie gemeinsam mit dem aufgeschlitzten Wellrohr zum Rohr geformt wird. Das Metallband bzw. die Metallfolie ist vorteilhafterweise eine Aluminiumfolie, die beidseitig mit einem Copolymer beschichtet ist. Diese Metallfolie bzw. dieses Metallband, welche zweckmäßigerweise sowohl mit dem Kunststoffaußenrohr als auch mit der angrenzenden Wärmeisolationsschicht klebend verbunden ist, verhindert ein Eindringen von Wasserdampf von außen in die Isolierschicht und verhindert darüber hinaus ein Austreten des in den Zellen des Schaumstoffes befindlichen Treibgases und verhindert somit ein Abfallen des Wärmeisolationswertes der Schaumstoffschicht.

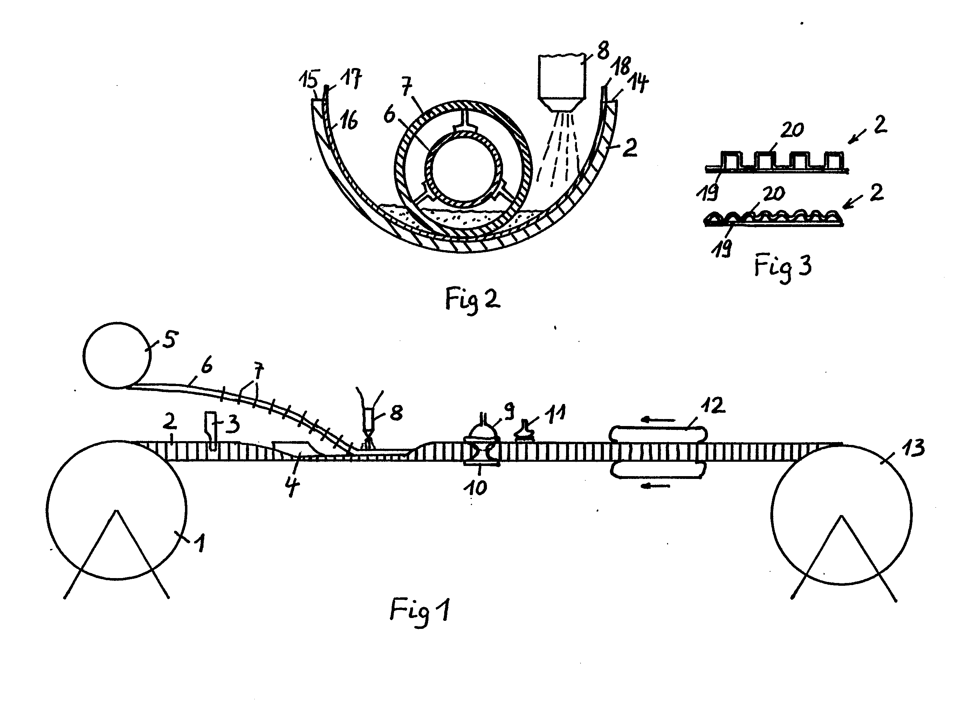

Die Erfindung ist anhand des in den Fig. 1 bis 3 schematisch dargestellten Ausführungsbeispiels näher erläutert.

Von einer Vorratsspule 1 wird ein gewelltes Kunststoffrohr 2 kontinuierlich abgezogen und mittels einer geeigneten Trennvorrichtung 3 längs aufgeschlitzt. Die Trennvorrichtung 3 kann beispielsweise eine Trennscheibe, eine Säge oder aber auch ein beheiztes Metallteil sein. Das längs aufgeschlitzte Kunststoffrohr 2 wird dann mittels einer geeigneten Formvorrichtung 4 aufgebogen, wie in der Fig. 2 dargestellt. In das geöffnete Kunststoffrohr 2 wird ein von einer Vorratsspule 5 kontinuierlich abgezogenes Innenrohr 6, welches mit Abstandshaltern 7 versehen ist, eingeführt. Nach dem Einführen des Innenrohres 6 schließt sich das aufgeklappte Kunststoffrohr 2 durch sein Rückstellverhalten. Das Innenrohr 6 ist zweckmäßigerweise ein gewelltes Metallrohr, kann aber auch ein Kunststoffrohr sein. Mittels einer Sprühpistole 8 wird auf die innere Oberfläche des aufgeklappten Kunststoffrohres 2 ein aufschäumbares Kunststoffgemisch auf der Basis von Polyurethan aufgesprüht, welches den Ringraum zwischen dem Innenrohr 6 und dem verschlossenen Kunststoffaußenrohr 2 ausfüllen soll. Die wieder zusammengeführten Bandkanten des längs aufgeschlitzten Kunststoffrohres 2 werden mittels eines Heizspiegels 9 verschweißt. Formrollen 10, die beidseitig an dem Rohr 2 angreifen, bringen dabei den erforderlichen Anpreßdruck für die Verschweißung auf. Unmittelbar nach dem Verschweißen des Längsschlitzes wird die Schweißnaht, wie bei 11 dargestellt, intensiv gekühlt beispielsweise mittels einer Wasserdusche. Eine Abzugsvorrichtung 12, in deren Eingriffsbereich der Ringraum vollständig ausgeschäumt sein sollte, zieht das fertige wärmeisolierte Leitungsrohr durch die Anlage. Der Bandabzug 12, der auch ein Spannbackenabzug sein kann, kann an dem verschweißten Kunststoffrohr 2 auch unmittelbar hinter dem Schweißspiegel 9 angreifen, wobei die Trums der Abzugsvorrichtung 12 so an dem Rohr 2 angreifen sollten, daß die verschweißten Bandkanten mit leichtem Druck gegeneinandergepreßt werden. Das fertige wärmeisolierte Leitungsrohr kann dann auf eine Vorratsspule 13, welches eine übliche Kabeltrommel ist, aufgewickelt oder aber in handelsübliche Längen getrennt werden, die dann in einer nicht mehr dargestellten Vorrichtung zu Ringbunden gewickelt werden.

Die Fig. 2 zeigt einen vergrößerten Schnitt durch die Fertigungsanlage im Bereich der Sprüheinrichtung 8. Das Kunststoffrohr 2 ist wie dargestellt aufgeklappt, wobei seine Bandkanten 14 und 15 so weit auseinandergespreizt sind, daß das mit dem Abstandshalter 7 versehene Innenrohr 6 ohne Schwierigkeiten eingeführt werden kann und darüber hinaus noch so viel Platz verbleibt, daß das aufschäumbare Kunststoffgemisch mittels der Sprühvorrichtung 8 eingeführt werden kann. An der inneren Oberfläche des Kunststoffrohres 2 befindet sich eine Metallfolie 16, welche vorteilhafterweise mit der inneren Oberfläche des Kunststoffrohres 2 verklebt ist. Es handelt sich hierbei um eine Aluminiumfolie, die beidseitig mit Copolymer beschichtet ist. Die Breite der Metallfolie 16 ist etwas größer als der innere Durchmesser des Kunststoffrohres 2, so daß die Bandkanten 17 und 18 der Metallfolie 16 über die Bandkanten 14 und 15 hinausragen. Dadurch wird erreicht, daß die Bankantenbereiche 17 und 18 beim Formen des Kunststoffrohres 2 zum geschlossenen Rohr sich überlappend überdecken, so daß eine vollständige, dichte innere Metallauskleidung des Kunststoffrohres 2 gebildet wird. Diese Metallauskleidung soll ein Eindiffundieren von Feuchtigkeit in die aufgeschäumte Isolierschicht verhindern und darüber hinaus gewährleisten, daß das in den Zellen des Schaumstoffes befindliche Treibgas nicht aus der Isolierung austreten kann.

In der Fig. 3 sind zwei Ausführungsbeispiele eines Kunststoffwellrohres im Schnitt durch dessen Wandung dargestellt. Das Kunststoffwellrohr 2 besteht aus einem inneren glatten Kunststoffrohr 19 und einem darüber gelegenen Kunststoffwellrohr 20, welches im einen Fall eine sog. Rechteckwellung, im anderen Fall eine sog. Sinuswellung hat. Das glatte Kunststoffrohr 19 und das gewellte Kunststoffrohr 20 sind an ihren Berührungspunkten bzw. Berührungsflächen miteinander verbunden. Derartige Rohre sind auf dem Markt erhältlich und eignen sich gut für den vorgesehenen Zweck. Aufgrund der Wellung besitzen sie eine sehr hohe Quersteifigkeit, so daß sie im verlegten Zustand hohe Verkehrslasten aufnehmen können, ohne daß die Wärmeisolationsschicht in Mitleidenschaft gezogen wird.

In Abänderung des in der Fig. 1 gezeigten Verfahrensablaufes kann auch vorgesehen werden, daß das mit den Abstandshaltern 7 versehene Innenrohr in kontinuierlicher Weise längseinlaufend von dem Metallband 16 umhüllt wird und die Bandkanten 17 und 18 des Metallbandes verklebt oder verschweißt werden. Vor dem Schließen der Bandkanten wird das aufschäumbare Kunststoffgemisch eingefüllt. Nach dem Schließen der Bandkanten 17 und 18 kann das so gefertigte Gebilde in das aufgeklappte Kunststoffwellrohr 2 eingefahren werden, dessen Längskanten dann, wie in der Fig. 1 gezeigt, miteinander verschweißt werden. Diese Vorgehensweise hat den Vorteil, daß besondere Vorkehrungen bezüglich der Schweißnahtfestigkeit nicht getroffen werden müssen. Die innere Oberfläche des Kunststoffwellrohres 2 kann mit der Oberfläche der Metallfolie 16 verklebt werden. Es ist aber auch möglich, vor dem Schließen der Bandkanten 14 und 15 des Kunststoffrohres 2 in das aufgeklaffte Kunststoffrohr 2 portionsweise eine dauerplastische Masse, z. B. Vaseline, einzufüllen, die beim Formen des Kunststoffrohres 2 um das zum Rohr geformte Metallband 16 sich über den gesamten Umfang des zwischen dem Kunststoffwellrohr 2 und dem zum Rohr geformten Metallband 16 entstehenden Ringspalt verteilt. Dadurch ergeben sich Abschottungen, welche eine Längswasserwanderung im Falle einer Beschädigung des Leitungsrohres in Längsrichtung desselben verhindern soll.

In die Isolierschicht kann in nicht dargestellter Weise noch ein Meldeleiterpaar eingeführt werden, welches im Fall einer Leckage des Rohres diesen Schaden melden und orten kann.

## Ansprüche

1. Verfahren zur kontinuierlichen Herstellung eines flexiblen wärmeisolierten Leitungsrohres, bestehend aus einem flexiblen Innenrohr, einem Außenrohr mit gewellter Wandung und einer zwischen dem Innen-und dem Außenrohr befindlichen Schicht aus aufgeschäumtem Kunststoff auf der Basis von Polyurethan, bei dem ein kontinuierlich zugeführtes Innenrohr von einer äußeren Hülle umgeben wird, und ein aufschäumbares Kunststoffgemisch zugeführt wird, welches den Ringraum zwischen Innen-und Außenrohr ausschäumt, nachdem die Hülle zum Außenrohr geschlossen ist, dadurch gekennzeichnet, daß ein gewelltes Kunststoffrohr kontinuierlich von einem Vorrat abgezogen, längs aufgeschlitzt und um das Innenrohr herumgelegt wird, und daß der Längsschlitz nach dem Einführen des aufschäumbaren Kunststoffgemisches verklebt oder verschweißt wird.

2. Verfahren nach Anspruch 1, dadurch gekennzeichnet, daß das Rohr durch Spiegelschweißung verschlossen wird.

3. Verfahren nach Anspruch 1 oder 2, dadurch gekennzeichnet, daß das Rohr nach dem Aufschlitzen an seinen Bandkanten bis zum Schweißpunkt geführt wird.

4. Verfahren nach Anspruch 1 oder einem der folgenden, dadurch gekennzeichnet, daß auf das Innenrohr vor der Umhüllung ein oder mehrere Abstandhalter aufgebracht werden.

5. Verfahren nach Anspruch 1 oder einem der folgenden, dadurch gekennzeichnet, daß nach dem Schweißen oder Kleben der Längsnaht die Längskanten gegeneinandergedrückt werden und die Naht gekühlt wird.

6. Verfahren nach Anspruch 1 oder einem der folgenden, dadurch gekennzeichnet, daß das aufschäumbare Gemisch bezüglich der Reaktionszeit so eingestellt wird, daß der Ringraum nach dem Erkalten der Längsnaht ausgefüllt wird.

7. Verfahren nach Anspruch 1 oder einem der folgenden, dadurch gekennzeichnet, daß als Außenrohr ein doppelwandiges Kunststoffrohr verwendet wird, dessen Innenrohr glatt und dessen mit dem Innenrohr kraftschlüssig verbundenes Außenrohr gewellt ist.

8. Verfahren nach Anspruch 1 oder einem der folgenden, dadurch gekennzeichnet, daß nach dem Auftrennen des Wellrohres an die Längskanten eine Vielzahl von Formrollen angreifen.

9. Verfahren nach Anspruch 1 oder einem der folgenden, dadurch gekennzeichnet, daß unmittelbar nach dem Auftrennen des Wellrohres eine walzen-oder tonnenförmige Formwalze auf die innere Oberfläche des Wellrohres einwirkt.

10. Verfahren nach Anspruch 1 oder einem der folgenden, dadurch gekennzeichnet, daß an der inneren Oberfläche des gewellten Außenrohres eine Metallfolie angeordnet wird, die zu einem Rohr mit überlappenden Bandkanten geformt und im Überlappungsbereich verklebt wird.

11. Verfahren nach Anspruch 10, dadurch gekennzeichnet, daß das Metallband gemeinsam mit dem aufgeschlitzten Wellrohr zum Rohr geformt wird.

Fig 2

Fig 3

Fig 1

0 279 024